# EUROPÄISCHE PATENTANMELDUNG

(11) **EP 2 570 827 A1**
(43) Veröffentlichungstag der Anmeldung: **20.03.2013**
(21) Anmeldenummer: 11181065.1
(22) Anmeldetag: 13.09.2011
(51) Int. Cl.: G02B 6/00

(54) **Lichtleiter, Leuchtmittel und Kraftfahrzeugleuchte**

(71) Anmelder: Odelo GmbH, 71409 Schwaikheim (DE)
(72) Erfinder: Borowski, Martin, 71334 Waiblingen (DE); Schwegler, Veit, Dr., 70372 Stuttgart (DE)
(74) Vertreter: Benninger, Johannes

(57) **Zusammenfassung**

Es werden ein Lichtleiter (10), ein einen solchen Lichtleiter (10) umfassendes Leuchtmittel (20) sowie eine mit mindestens einem derartigen Leuchtmittel (20) ausgestattete Kraftfahrzeugleuchte beschrieben. Der Lichtleiter (10) weist eine beidseitige Lichteinkopplung auf, sowie an zwei dessen gegenüberliegende Endbereiche abschließenden Stirnseiten (11, 12) angeordnete Lichteinkoppelflächen (13, 14) und mindestens eine von den Lichteinkoppelflächen (13, 14) verschiedene Lichtauskoppelfläche (15). Der Lichtleiter (10) weist mindestens zwei getrennte Zweige (30, 31, 32) auf, umfassend zumindest einen ersten Zweig (31) und einen zweiten Zweig (32) mit jeweils einer Lichteinkoppelfläche (13, 14) und einer dieser gegenüberliegenden Lichtüberkoppelfläche (33, 34), mit welcher Lichtüberkoppelfläche (33, 34) jeder Zweig (30, 31, 32) an einer Lichtüberkoppelstelle (16) einem benachbarten Zweig (30, 32, 31) zugewandt ist, und vermittels welcher Lichtüberkoppelfläche (33, 34) jeder Zweig (30, 31, 32) in diesem zur Lichtüberkoppelstelle (16) hin propagiertes Licht (17, 18) in den jeweils benachbarten Zweig (30, 32, 31) überkoppelt.

## Beschreibung

Die Erfindung betrifft einen Lichtleiter gemäß dem Oberbegriff des Anspruchs 1, ein Leuchtmittel umfassend einen solchen Lichtleiter gemäß dem Oberbegriff des Anspruchs 9 sowie eine Kraftfahrzeugleuchte mit mindestens einem zuvor genannten Leuchtmittel gemäß dem Oberbegriff des Anspruchs 10.

Eine Kraftfahrzeugleuchte umfasst im Wesentlichen einen von einem Leuchtengehäuse und einer Lichtscheibe umschlossenen Leuchteninnenraum und mindestens ein darin beherbergtes Leuchtmittel für wenigstens eine Lichtfunktion der Kraftfahrzeugleuchte. In dem Leuchteninnenraum kann mindestens ein hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine transparente Abdeckung gebildet, welche den Leuchteninnenraum sowie die von diesem beherbergten Bauteile gegen Witterungseinflüsse schützt.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Kammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere Kammern gleiche oder jede Kammer eine andere Lichtfunktionen erfüllen kann.

Bei einer Lichtfunktion handelt es sich dabei um eine zur Erfüllung einer Aufgabe vorgesehene Funktion der Kraftfahrzeugleuchte. Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Ein Leuchtmittel für wenigstens eine Lichtfunktion umfasst zumindest wenigstens eine Lichtquelle, beispielsweise mindestens eine Glühlampe oder mindestens eine Gasentladungslampe oder mindestens eine Leuchtdiode sowie gegebenenfalls Kombinationen hiervon.

Beispielsweise kommen als Lichtquellen von Leuchtmitteln für Kraftfahrzeugleuchten unter anderem wegen ihres geringen Stromverbrauchs vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Kraftfahrzeugleuchten verwirklicht werden, die an fast jede nur erdenkliche Einbausituation angepasst sein können.

Darüber hinaus können bei einer Kraftfahrzeugleuchte ein oder mehrere Lichtleiter vorgesehen sein, beispielsweise um eine gewünschte Lichtverteilung z.B. über die Lichtscheibe hinweg des von einer oder mehreren Lichtquellen ausgestrahlten Lichts zu erhalten.

Ein Lichtleiter, in den Licht mindestens einer Lichtquelle an mindestens einer Lichteinkoppelfläche ein- und an mindestens einer von der Lichteinkoppelfläche verschiedenen Lichtauskoppelfläche wieder ausgekoppelt wird, kann dabei als ein separates Bauteil im Leuchteninnenraum beherbergt oder Teil eines Leuchtmittels sein.

Beispielsweise kann ein Leuchtmittel einen oder mehrere Lichtleiter sowie eine oder mehrere, das von ihnen ausgestrahlte Licht zumindest zum Teil in den wenigstens einen Lichtleiter einkoppelnde Lichtquellen umfassen. Ein Lichtleiter eines solchen Leuchtmittels kann beispielsweise als Primäroptik einer oder mehrerer LEDs dienen bzw. als eine solche Primäroptik ausgebildet sein.

Der Lichtleiter kann beispielsweise stabförmig als so genannter Stablichtleiter und/oder flächig als so genannter Flächenlichtleiter ausgebildet sein, mit einer auf seiner beispielsweise normal zur Hauptabstrahlrichtung einer Kraftfahrzeugleuchte orientierten Vorderseite angeordneten Lichtauskoppelfläche.

Der Lichtleiter dient dabei der Erzielung einer Erfüllung einer beispielsweise durch gesetzliche Anforderungen vorgeschriebenen Lichtverteilungen in eine oder mehrere Vorzugsrichtungen und Leuchtdichte in dieser einen oder mehreren Vorzugsrichtungen unter gleichzeitig größtmöglicher Anpassung an die äußere Gestalt der Kraftfahrzeugleuchte. Diese äußere Gestalt der Kraftfahrzeugleuchte ist beispielsweise durch die gestalterische Formgebung eines Kraftfahrzeugs sowie durch die vorgesehene Kontur der Kraftfahrzeugleuchte vorgegeben und spiegelt sich im so genannten

### Strakverlauf wider.

Damit das aus einer Lichtauskoppelfläche austretende Licht bei einem solchen Lichtleiter einer bestimmten, bei einer Kraftfahrzeugleuchte gesetzlich vorgegebenen Lichtverteilung in eine oder mehrere Vorzugsrichtungen und Leuchtdichte in dieser einen oder mehreren Vorzugsrichtungen der Lichtauskopplung aus dem Lichtleiter genügt, sind beispielsweise auf einer der Lichtauskoppelfläche gegenüberliegenden Rückseite des Lichtleiters vorgesehene Lichtleiterauskoppelstrukturen mit einer gerichteten Auskopplung des in den Lichtleiter eingekoppelten Lichts in einer oder mehreren Vorzugsrichtungen beispielsweise über die gesamte Länge des Lichtleiters hinweg bekannt.

Diese Lichtleiterauskoppelstrukturen umfassen eine beispielsweise auf der Lichtleiterrückseite angeordnete, totalreflektierende Prismenstruktur, welche das Licht im Lichtleiter umlenkt und an einer gegenüberliegenden oder angrenzenden Lichtauskoppelfläche unter Brechung beim Übergang vom Lichtleitermaterial zur umgebenden Luft in mindestens einer Vorzugsrichtung unter Einhaltung einer den lichttechnischen Anforderungen in der mindestens einen Vorzugsrichtung genügenden Leuchtdichte auszukoppeln.

Der Einsatz eines Lichtleiters zur Erfüllung gesetzlicher Vorgaben von Lichtfunktionen von Kraftfahrzeugen ist aus kommerzieller Sicht insofern attraktiv, da bei Reflektorsystemen auf Grund der gesetzlichen Flächenanforderung eine hohe Anzahl an in jeweils eigenen Reflektorkammern angeordneten Lichtquellen, wie etwa LEDs notwendig sind, verbunden mit einem mit zunehmender zu erfüllender Lichtstärke, wie etwa bei einer hochgesetzten Bremslichtfunktion steigenden, hohen Herstellungs- und Kostenaufwand. Darüber hinaus ist der Bauraumbedarf von Lichtleitern geringer als von Reflektorsystemen.

Dem Einsatz von Lichtleitern entgegenstehend ist jedoch, dass es unter Anderem auch bei starken Strakverläufen angepassten, gekrümmt verlaufenden Lichtleitern, wie sie insbesondere in Kraftfahrzeugleuchten benötigt werden, um der Form einer in die Außenkontur eines Kraftfahrzeugs eingepassten Lichtscheibe einer Kraftfahrzeugleuchte zu folgen, und/oder bei zur Erfüllung von Lichtfunktionen hoher Lichtstärke vorgesehenen Lichtleitern aufgrund der gezielten Umlenkung in die eine oder mehreren Vorzugsrichtungen zu einer lokal stark inhomogenen Leuchtdichtenverteilung bei der Betrachtung aus einem Betrachtungswinkel kommt. Diese macht sich durch mit bloßem Auge wahrnehmbar unterschiedliche Helligkeiten im Erscheinungsbild des Lichtleiters bemerkbar. Dies wird als störend und den Qualitätseindruck nachhaltig negativ beeinflussend empfunden.

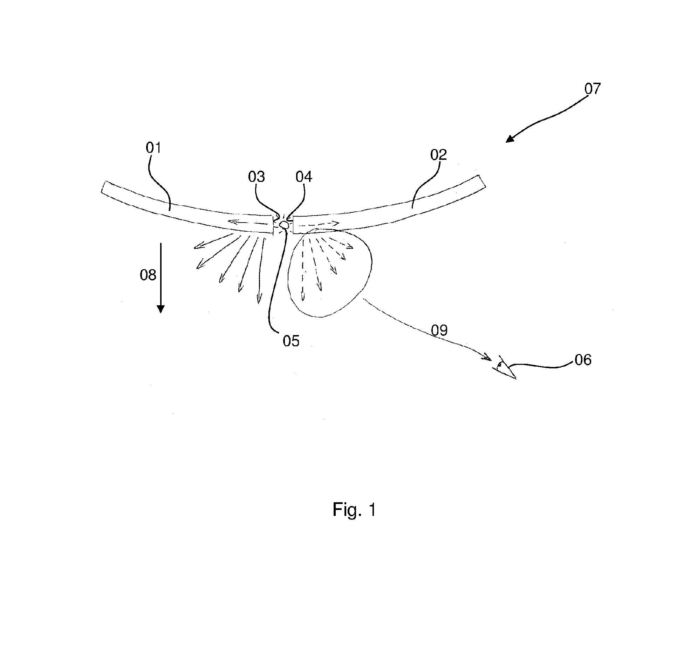

Fig. 1 zeigt ein Beispiel eines Leuchtmittels 07 mit zwei einem Strakverlauf angepassten, gekrümmt verlaufenden Lichtleitern 01, 02, die beispielsweise zur Erfüllung einer Lichtfunktion hoher Lichtstärke, wie etwa einer hochgesetzten Bremslichtfunktion vorgesehen sind. Die Lichtleiter 01, 02 sind im Hinblick auf deren Effizienz auf eine möglichst hohe Lichtstärke in einer durch einen Pfeil angedeuteten Vorzugsrichtung 08 optimiert ausgelegt. Die beiden Lichtleiter 01, 02 sind mit ihren Lichteinkoppelflächen 03, 04 einander und einer gemeinsamen Lichtquelle 05 des Leuchtmittels 07 zugewandt gegenüberliegend angeordnet. Aufgrund der entgegengesetzten Lichteinkopplung in die beiden Lichtleiter 01, 02 und der damit unterschiedlichen notwendigen Umlenkungen zum Erhalt der Lichtauskopplung in Vorzugsrichtung 08, erscheint für einen Beobachter 06 bei einer Betrachtung aus einem durch einen Pfeil angedeuteten Betrachtungswinkel 09 der rechte Lichtleiter 02 hell und der linke Lichtleiter 01 dunkel.

Die Blickwinkelabhängigkeit bezüglich der Lichtleiterleuchtdichte ist unter anderem aus Gründen der Effizienzsteigerung bedingt. Zur Effizienzsteigerung ist angestrebt, das Licht über definiert angeordnete Lichtleiterauskoppelstrukturen, wie etwa Prismen, gezielt in Vorzugsrichtung auszukoppeln und Streulichtauskopplung auf Grund von Oberflächenrauhigkeiten zu minimieren. Im Falle einer effizient in einer Vorzugsrichtung auskoppelnden Lichtleiterauskoppelstruktur ergibt sich hierbei eine asymmetrische Abstrahlcharakteristik des Lichtleiters, bei der die Lichtstärkeverteilung von der Lichtquelle weg verschoben ist.

Hierzu sei vorausgeschickt, dass ein Lichtleiter in aller Regel um so effizienter ist, je stärker das in den Lichtleiter eingekoppelte Licht kollimiert ist, um möglichst selten mit Grenzflächen zu interagieren. Hierdurch wird der durch Grenzflächenrauhigkeit-, defekte, etc. verursachte Streuanteil an der Lichtleitergesamtauskopplung minimiert. Darüber hinaus wird so eine möglichst geringe Streuung in von der einen oder mehreren Vorzugsrichtungen verschiedenen Richtungen erhalten.

Nachteilig hieran ist jedoch, dass ein beträchtlicher Teil des Lichts den Lichtleiter passiert ohne ausgekoppelt zu werden und an einer beispielsweise der Lichteinkoppelfläche gegenüberliegenden Endfläche wieder austritt. Dies ist insbesondere der Fall, wenn der Lichtleiter über seine gesamte Länge einer gleichmäßigen Leuchtdichteverteilung genügen muss und sich beispielsweise durch eine Abnahme des Querschnitts von der Lichteinkoppelfläche weg nicht verjüngt.

Dem Einsatz von Lichtleitern ebenfalls entgegenstehend ist außerdem, dass Lichtleiter üblicherweise große Gesamtabmessungen, insbesondere beispielsweise auf Grund ihrer im Allgemeinen geringen Höhe große Länge aufweisen müssen, um der gesetzlichen Flächenanforderung insbesondere an eine Lichtfunktion hoher Lichtstärke zu genügen. Ein hieraus entstehendes Problem ist die Bereitstellung eines zur Herstellung eines sehr langen Lichtleiters benötigten, entsprechend großen Spritzgusswerkzeugs und der damit einhergehend langen und dadurch kostenintensiven Spritzguss-Zykluszeiten. Die Kostenintensität ist unter anderem bedingt durch die lange Verweildauer derartiger Lichtleiter im Spritzgusswerkzeug um abzukühlen. Hierdurch wird die begrenzte Anzahl vorhandener Spritzgusswerkzeuge und -maschinen blockiert, wodurch diese nicht für einen anderen, wirtschaftlich gewinnbringenden Zweck eingesetzt werden können.

Daher beschränkt sich der Einsatz von Lichtleitern zur Fahrzeugbeleuchtung auf Grund einer moderaten Effizienz und dem hohen Anspruch an die Homogenität der Ausleuchtung bislang häufig auf die Erfüllung von im Vergleich zu anderen Lichtfunktionen weniger lichtstarken Lichtfunktionen, wie etwa der Rück- bzw. Schlusslichtfunktion.

Durch EP 1 561 070 B1 ist ein Lichtleiterelement bekannt, das allgemein betrachtet aus zwei parallel angeordneten, an den aneinander anliegenden Flächen miteinander verbundenen Lichtleitern besteht. Prismenstrukturen auf zwei gemeinsam die Rückseite des Lichtleiterelements bildenden Lichtleiterrückseitenpartien dienen einer Lichtauskopplung in einer normal zu einer der Lichtleiterrückseite gegenüberliegenden, ebenen gemeinsamen Lichtauskoppelfläche orientierten Vorzugsrichtung. Die gemeinsame Lichtauskoppelfläche weist zwei jeweils einer Lichtleiterrückseitenpartie zugeordnete Lichtauskoppelflächenpartien auf. Vermittels überlappender, gegenläufiger Prismenstrukturen auf den zwei der Lichtauskoppelfläche gegenüberliegenden Lichtleiterrückseitenpartien und beidseitige Lichteinkopplung an zwei gegenüberliegenden, die Endbereiche des Lichtleiterelements bildende und die gemeinsame Lichtauskoppelfläche mit der Lichtleiterrückseite verbindenden Lichteinkoppelflächen wird einerseits eine gleichmäßige Ausleuchtung der gemeinsamen Lichtauskoppelfläche erhalten und darüber hinaus eine helle Erscheinung auch der Endbereiche des Lichtleiters bei einer Betrachtung aus einer der Vorzugsrichtung der Lichtauskopplung entsprechenden Richtung normal zur durch eine Lichtleitervorderseite gebildeten gemeinsamen Lichtauskoppelfläche.

Nachteilig hieran ist, dass wenn mehrere Vorzugsrichtungen mit einem solchen Lichtleiterelement verwirklicht werden sollen, keine homogene Leuchtdichtenverteilung erhalten werden kann. Darüber hinaus ist das ebene Lichtleiterelement nicht geeignet, einem gekrümmten Verlauf einer Lichtscheibe zu folgen. Ein weiterer Nachteil ist, dass von dem einen Lichtleiter in den anderen Lichtleiter gelangendes Licht nicht durch die gemeinsame Lichtauskoppelfläche austreten kann. Es tritt im jeweils anderen Lichtleiter des Lichtleiterelements unkontrolliert aus und geht verloren. In jedem Fall steht es nicht zum gewünschten Zweck einer Abstrahlung in der Vorzugsrichtung zur Verfügung. Ein zusätzlicher Nachteil ist ein sehr hoher Fertigungsaufwand des Lichtleiterelements bedingt durch hohe Anforderungen an die Spritzgusstechnik aufgrund der großen Abmessungen und Volumina des Lichtleiterelements, einhergehend mit langen und dadurch kostenintensiven Spritzguss-Zykluszeiten.

Durch DE 198 04 440 A1 ist ein stabförmiger Lichtleiter für eine Kraftfahrzeugleuchte, wie etwa eine hochgesetzte Bremsleuchte, mit beidseitiger Lichteinkopplung bekannt. Der Lichtleiter ist auf seiner der sich entlang der Stabform mit konstanten Querschnittsabmessungen erstreckenden Lichtauskoppelfläche abgewandten Lichtleiterrückseite mit einer dem Lichtstrom im Lichtleiter angepassten Prismenstruktur versehen, um eine homogene Ausleuchtung des Lichtleiters zu erhalten. Die Anpassung sieht vor, dass die über die gesamte Länge identisch beabstandeten und identisch geformten Prismen um so breiter sind, je kleiner der Lichtstrom im Lichtleiter ist. Dabei nimmt der Lichtstrom im Lichtleiter von den von der Lichtauskoppelfläche verschiedenen, durch die Stirnflächen an entfernten Enden des Lichtleiters gebildeten Lichteinkoppelflächen ausgehend zur Mitte des Lichtleiters hin durch eine über die Länge des Lichtleiters stattfindende Lichtauskopplung ab.

Nachteilig hieran ist, dass der gerade, stabförmige Lichtleiter jeweils nur der mit der Prismenstruktur hinterlegte Teil der Lichtauskoppelfläche aus Richtung der Vorzugsrichtung gesehen hell scheint. Verbleibende Teile, beispielsweise solche, in denen sich die Prismen nur über einen Teil der Breite der Lichtleiterrückseite erstrecken erscheinen demgegenüber dunkel. Dadurch weist der Lichtleiter zwar über seine Länge messtechnisch homogene Leuchtdichte in Vorzugsrichtung auf, erscheint jedoch insbesondere bei einem gekrümmten Verlauf über seine Länge hinweg unterschiedlich hell sowie in seiner Breite unterschiedlich ausgeleuchtet. Darüber hinaus ist dadurch die als leuchtend wahrgenommene Fläche des Lichtleiters verringert, was die Erfüllung einer gesetzlichen Flächenanforderung erschwert. Ein weiterer Nachteil ist, dass ein beträchtlicher Teil des Lichts den Lichtleiter passiert ohne ausgekoppelt zu werden und an den jeweils gegenseitig Endflächen bildenden, gegenüberliegenden Lichteinkoppelflächen wieder austritt. Dies ist insbesondere der Fall, weil der Lichtleiter sich über seine gesamte Länge nicht durch eine Abnahme des Querschnitts von der Lichteinkoppelfläche weg verjüngt. Darüber hinaus weist der Lichtleiter, um beispielsweise ebenfalls gesetzlich vorgegebene Mindestanforderungen an die sichtbare, leuchtende Fläche einer Lichtfunktion zu erfüllen, große Abmessungen auf, welche einen sehr hohen Fertigungsaufwand bedingt durch hohe Anforderungen an die Spritzgusstechnik nach sich ziehen.

Eine Aufgabe der Erfindung ist es, einen Lichtleiter zu entwickeln, der insbesondere bei Verwendung in einem Leuchtmittel für eine Kraftfahrzeugleuchte die Nachteile des Standes der Technik behebt, ohne die grundsätzlichen Vorteile der Verwendung von Lichtleitern einzuschränken.

Der Erfindung liegt insbesondere die Aufgabe zu Grunde, einen Lichtleiter, ein Leuchtmittel mit einem Lichtleiter und eine Kraftfahrzeugleuchte mit einem einen Lichtleiter umfassenden Leuchtmittel zu entwickeln, welche im Vergleich zum Stand der Technik einfach und kostengünstig hergestellt werden können und auch bei einem stark gekrümmten Strakverlauf und/oder bei hoher Lichtstärke in mindestens einer Vorzugsrichtung unter Einhaltung einer gezielten Lichtauskopplung in mindestens einer vorgegebenen Lichtverteilung und Leuchtdichte in einer oder mehreren Vorzugsrichtungen ein homogenes Erscheinungsbild bei vorzugsweise homogener Leuchtdichtenverteilung aufweisen.

Die Aufgabe wird jeweils gelöst mit den Merkmalen der unabhängigen Ansprüche.

Ein erster Gegenstand der Erfindung betrifft demnach einen beispielsweise stabförmigen, vorzugsweise beispielsweise in einer Ebene und/oder besonders bevorzugt dreidimensional im Raum gekrümmt verlaufenden Lichtleiter zur bevorzugten Verwendung in einem vorzugsweise für wenigstens eine Lichtfunktion einer Kraftfahrzeugleuchte mit mindestens einer Lichtfunktion vorgesehenen Leuchtmittel. Der Lichtleiter ist für eine beidseitige Lichteinkopplung mit zwei an gegenüberliegende Endbereiche abschließenden Stirnseiten des Lichtleiters angeordneten, jeweils mindestens einer Lichtquelle des Leuchtmittels zugeordneten Lichteinkoppelflächen sowie mindestens einer von den Lichteinkoppelflächen verschiedenen Lichtauskoppelfläche vorgesehen. Darüber hinaus kann der Lichtleiter beispielsweise wenigstens eine von der zumindest einen Lichtauskoppelfläche und den Lichteinkoppelflächen verschiedene Lichtumlenkfläche aufweisen, welche im Lichtleiter geführtes Licht in einer oder mehreren Vorzugsrichtungen aus diesem auskoppelt und/oder innerhalb des Lichtleiters gezielt in einer oder mehreren Richtungen zu einer Lichtauskoppelfläche hin umlenkt, dass das Licht an der Lichtauskoppelfläche unter Brechung beim Übergang vom Lichtleitermaterial zum umgebenden Medium, beispielsweise zur umgebenden Luft, in wenigstens einer Vorzugsrichtung ausgekoppelt wird.

Der Lichtleiter zeichnet sich durch eine zwei- oder mehrstückige Ausgestaltung mit mindestens zwei, jeweils paarweise aneinander angrenzenden Zweigen umfassend zumindest einen ersten Zweig und einen zweiten Zweig aus. Die paarweise aneinander angrenzenden Zweige sind durch jeweils eine Lichtüberkoppelstelle voneinander getrennt. Dadurch ergibt sich für eine zweistückige Ausgestaltung eine Lichtüberkoppelstelle, welche die mindestens eine Lichtüberkoppelstelle teilen kann.

Der erste Zweig und der zweite Zweig weisen jeweils eine Lichteinkoppelfläche und eine dieser gegenüberliegende Lichtüberkoppelfläche auf, von welcher jeweiligen Lichtüberkoppelfläche in Richtung der Lichtüberkoppelstelle bzw. in Richtung der Lichtüberkoppelfläche im Zweig propagiertes, noch nicht aus dem jeweiligen Zweig via die Lichtauskoppelfläche ausgekoppeltes Licht in den jeweils angrenzenden Zweig übergekoppelt wird. Umgekehrt wird entsprechend Licht empfangen, wobei in jeden Zweig noch nicht aus dessen angrenzendem Zweig via die Lichtauskoppelfläche ausgekoppeltes und im angrenzenden Zweig in Richtung der Lichtüberkoppelfläche propagiertes Licht eingekoppelt wird.

Zwischen dem ersten Zweig und dem zweiten Zweig können ein oder mehrere dritte Zweige angeordnet sein. Ein zwischen dem ersten Zweig und dem zweiten Zweig wahlweise angeordneter dritter Zweig weist jeweils zwei einander gegenüberliegende Lichtüberkoppelfläche auf.

Zwei Zweige grenzen damit an einer Lichtüberkoppelstelle mit ihren Lichtüberkoppelflächen aneinander an. Die Lichtüberkoppelflächen der zwei an einer Lichtüberkoppelstelle aneinander angrenzenden Zweige korrespondieren miteinander. Die Lichtüberkoppelflächen der zwei an einer Lichtüberkoppelstelle aneinander angrenzenden Zweige liegen dabei an einer Lichtüberkoppelstelle einander gegenüber.

Die Zweige können konstante Querschnittsabmessungen und/oder Querschnittsform aufweisen.

Der Lichtleiter besteht damit aus mindestens zwei in Serie angeordneten Zweigen, welche jeweils an ihren aneinander angrenzenden Lichtüberkoppelflächen austretendes Licht gegenseitig ein- bzw. überkoppeln, um eine homogene Ausleuchtung des Lichtleiters zu erhalten.

Der Lichtleiter ist bevorzugt stabförmig, wobei die die beiden Endbereiche des Stablichtleiters abschließenden Stirnseiten jeweils eine Lichteinkoppelfläche bilden, welche eine sich entlang einer Mittelachse des Lichtleiters erstreckende und die mindestens eine Lichtauskoppelfläche umfassende Lichtleitervorderseite mit einer sich entlang einer Mittelachse des Lichtleiters erstreckenden und bevorzugt zumindest eine Lichtumlenkfläche umfassenden Lichtleiterrückseite verbindet. Die eine oder mehrere, jeweils eine Trennstelle bildenden Lichtüberkoppelstellen liegen entlang einer durch die Mittelachse gebildeten Kurve zwischen den beiden Stirnseiten. Eine Mittelachse kann dabei beispielsweise definiert sein als stetige oder unstetige mathematische Kurve, auf der die Schwerpunkte aller aufeinander folgender Querschnittsflächen des Lichtleiters liegen. Aus dieser möglichen Unstetigkeit heraus ergibt sich die Möglichkeit, dass der Lichtleiter in aufeinander folgenden Abschnitten bzw. Bereichen, beispielsweise in zwei aneinander angrenzenden Zweigen verschiedene Mittelachsen aufweist, weshalb wenn im Folgenden von einer Mittelachse die Rede ist, es sich um mindestens eine Mittelachse handeln kann.

Die mindestens eine Lichtumlenkfläche ist bevorzugt auf wenigstens einer der oder den Lichtauskoppelflächen gegenüberliegenden Lichtleiterrückseite angeordnet oder von einer solchen umfasst oder umfasst eine solche.

Die mindestens eine Lichtumlenkfläche umfasst vorzugsweise zumindest zum Teil wenigstens eine beispielsweise totalreflektierende Prismenstruktur, vermittels der in den Lichtleiter an den Lichteinkoppelflächen ein- und an den Lichtüberkoppelflächen von den jeweils an einer Lichtüberkoppelstelle benachbarten Zweigen ineinander übergekoppeltes Licht gezielt in einer oder mehreren Richtungen zur der jeweiligen Lichteinkoppelfläche zugeordneten Lichtauskoppelfläche hin umgelenkt und an der Lichtauskoppelfläche unter Brechung beim Übergang vom Lichtleitermaterial zum umgebenden Medium, beispielsweise zur umgebenden Luft, in wenigstens einer Vorzugsrichtung unter Einhaltung einer beispielsweise gesetzlich vorgegebenen lichttechnischen Anforderungen an eine Kraftfahrzeugleuchte in einer oder mehreren Vorzugsrichtungen genügenden Leuchtdichte ausgekoppelt wird. Die Vorzugsrichtungen sind dabei durch eine beispielsweise gesetzlich vorgegebene Lichtverteilung definiert.

Der Lichtleiter kann auf seiner der sich beispielsweise entlang der Stabform mit beispielsweise konstanten Querschnittsabmessungen erstreckenden Lichtauskoppelfläche abgewandten, die Lichtumlenkfläche bildenden Lichtleiterrückseite mit einer dem Lichtstrom im Lichtleiter angepassten Prismenstruktur versehen sein. Die Anpassung kann vorsehen, dass die über die gesamte Länge identisch beabstandeten und identisch geformten Prismen um so breiter sind, je kleiner der Lichtstrom im Lichtleiter ist. Dabei nimmt der Lichtstrom im Lichtleiter von den von der Lichtauskoppelfläche verschiedenen, durch die Stirnflächen an entfernten Enden des Lichtleiters gebildeten Lichteinkoppelflächen ausgehend zur Mitte des Lichtleiters hin durch eine über die Länge des Lichtleiters stattfindende Lichtauskopplung ab.

Wenigstens ein zumindest eine Lichtauskoppelflächenpartie umfasender Lichtauskoppelbereich kann mit wenigstens einer Diffusor-Struktur versehen sein, vermittels der in den Lichtleiter an den Lichteinkoppelflächen eingekoppeltes Licht mit einer statistischen Verteilung umgelenkt und an der Lichtauskoppelfläche unter Brechung beim Übergang vom Lichtleitermaterial zum umgebenden Medium diffus ausgekoppelt wird. Die Diffusor-Struktur kann beispielsweise an der oder an einer Lichtumlenkfläche vorgesehen sein.

Zur weiteren Verbesserung können identische Zweige aus gleichen Lichtleitern vorgesehen sein, welche beispielsweise durch Zwischenschaltung eines optischen Elements und/oder an ihren einander zugewandten Lichtüberkoppelflächen vorgesehene optische Strukturen, beispielsweise Fresnellinsenstrukturen, sowie Zwischenschaltung einer mechanischen Kupplung, beispielsweise in Form einer die beiden jeweils eine Lichtüberkoppelfläche aufweisenden Enden aufnehmenden und relativ zueinander ausrichtenden Kupplung, miteinander verbunden und gegengekoppelt sein können.

Beispielsweise können zumindest der erste Zweig und der zweite Zweig symmetrisch, besonders bevorzugt identisch ausgeführt sein. Durch eine Symmetrie der beiden Zweige, insbesondere durch eine identische Ausführung, kann eine weitere Kosteneinsparung erreicht werden, da in diesem Fall ein oder mehrere identische Spritzgusswerkzeuge für den linken bzw. ersten und rechten bzw. zweiten Zweig des Lichtleiters verwendet werden können. Alternativ oder zusätzlich können zwei oder mehr dritte Zweige identisch ausgeführt sein. Für diese gilt ebenfalls das gesagte in Bezug auf mögliche Kosteneinsparungen.

Zwischen den an einer Lichtüberkoppelstelle einander gegenüber liegenden Lichtüberkoppelflächen zweier aneinander angrenzender Zweige können ein oder mehrere optische Elemente zwischengeschaltet sein. Alternativ oder zusätzlich können die an einer Lichtüberkoppelstelle einander gegenüber liegenden Lichtüberkoppelflächen zweier aneinander angrenzender Zweige mit optischen Strukturen, beispielsweise Fresnellinsenstrukturen, versehen sein.

Zwei an einer Lichtüberkoppelstelle mit ihren Lichtüberkoppelflächen einander gegenüber liegenden, aneinander angrenzende Zweige können vermittels einer Kupplung miteinander verbunden und gegengekoppelt sein. Die Kupplung kann beispielsweise die beiden jeweils die Lichtüberkoppelflächen umfassenden Enden der beiden Zweige aufnehmen.

Die Kupplung kann mit einer Rastverbindung versehen sein.

Eine Rastverbindung umfasst korrespondierende Rastelemente, von denen wenigstens eines elastisch verformbar ist und bei der Herstellung der Rastverbindung im Anschluss an eine Verformung mit mindestens einem anderen lösbar oder unlösbar verhakt. Beispiele für derart korrespondierende Rastelemente sind eine Hintergreifung und ein in diese eingreifendes elastisch verformbares Rastmittel. Die Hintergreifung kann beispielsweise durch eine Nut oder einen Absatz mit einem Rücksprung gebildet sein, wohingegen das elastisch verformbare Rastmittel aus einer Rastfeder mit einer am freien Ende der Rastfeder angeordneten Rastnase bestehen kann, welche Rastnase bei hergestellter Rastverbindung in die Hintergreifung reicht. Dank der Rastfeder kann die Rastnase während der Herstellung der Rastverbindung elastisch zurückfedern und bei Passieren der Hintergreifung in diese einfedern. Ebenfalls sind Rastverbindungen bekannt, welche ohne an einer Rastfeder angeordnete Rastnase auskommen, beispielsweise um ein in eine Führung oder Nut eingeschobenes Bauelement am Herausfallen aus der Führung oder Nut zu hindern. Die Hintergreifung wird hierbei einfach durch eine Kante des Bauelements gebildet. Ebenfalls ist bekannt, eine Rastnase an einem ersten freien Ende einer Rastschwinge anzuordnen, so dass durch Druck auf ein zweites freies Ende der Rastschwinge die Rastverbindung einfach wieder gelöst werden kann. Ein anderes Beispiel für korrespondierende Rastelemente ist ein an einem ersten Bauelement angeordneter Rastvorsprung bzw. eine Rastnase sowie ein elastisch verformbares Rastfenster. Hierbei weicht das elastisch verformbare Rastfenster bei der Herstellung der Rastverbindung dem Rastvorsprung bzw. der Rastnase aus und schwingt nach dem Passieren dahinter zurück. Das Rastfenster bildet hierbei gleichzeitig elastisch verformbares Element und Hintergreifung der Rastverbindung.

Wichtig ist hervorzuheben, dass an der Trennstelle eines zweiteiligen Lichtleiters auch eine Verspiegelung vorgesehen sein kann, beispielsweise in Form einer Verspiegelung eines zwischen den Lichtüberkoppelflächen liegenden Kupplungselements, oder durch Verspiegelung oder totalreflektierende Ausgestaltung der Lichtüberkoppelflächen selbst.

Ein zweiter Gegenstand der Erfindung betrifft ein Leuchtmittel mit mindestens zwei Lichtquellen und wenigstens einem diesen zugeordneten, zuvor beschriebenen Lichtleiter. In den Lichtleiter wird Licht mindestens zweier Lichtquellen an den mindestens zwei Lichteinkoppelflächen des ersten und des zweiten Zweigs ein- und an mindestens einer von den Lichteinkoppelflächen verschiedenen Lichtauskoppelfläche wieder ausgekoppelt.

Als Lichtquellen kommen bevorzugt LEDs zum Einsatz. Der erste Zweig und der zweite Zweig des Lichtleiters können jeweils direkt an die LEDs angespritzt sein. In diesem Fall wird eine Lichteinkoppelfläche von den jeweils an eine LED bzw. einen LED-

Chip unmittelbar anstoßenden Partien des Lichtleiters umfasst.

Ein einen zuvor beschriebenen Lichtleiter umfassendes Leuchtmittel mit mindestens zwei beidseitig Licht in den Lichtleiter einkoppelnden Lichtquellen kann für eine Kraftfahrzeugleuchte, wie etwa eine hochgesetzte Bremsleuchte, vorgesehen sein.

Ein dritter Gegenstand der Erfindung betrifft eine Kraftfahrzeugleuchte mit einem von einem Leuchtengehäuse und einer Lichtscheibe umschlossenen Leuchteninnenraum und mindestens einem darin beherbergten Leuchtmittel für wenigstens eine Lichtfunktion der Kraftfahrzeugleuchte. Das mindestens eine Leuchtmittel umfasst neben wenigstens zwei Lichtquelle zumindest einen den wenigstens zwei Lichtquellen zugeordneten, zuvor beschriebenen Lichtleiter.

Die Kraftfahrzeugleuchte kann beispielsweise als Heckleuchte für ein Kraftfahrzeug ausgebildet sein. Besonders bevorzugt ist die Kraftfahrzeugleuchte als hochgesetzte Bremsleuchte ausgebildet.

Es ist ersichtlich, dass die Erfindung durch eine entgegengesetzte Kopplung zweier Lichtleiterzweige an ihren einer Lichtquelle gegenüberliegenden, jeweils eine Lichtüberkoppelfläche aufweisenden Enden zu einem Zwillingslichtleiter zum Zweck des Erhalts von eine einheitlich homogene Leuchtdichtenverteilung aufweisenden, über seine Gesamtlänge quer zu dessen Erstreckung austretenden Lichts verwirklicht sein kann.

Vorteile der Erfindung ergeben sich durch eine Verbesserung der Homogenität von insbesondere für hohe Lichtstärken vorgesehenen Lichtleitern für Kraftfahrzeugleuchten unter gleichzeitiger Kosteneinsparung. Die Kosteneinsparung wird durch eine im Vergleich zum Stand der Technik vereinfachte spritzgusstechnische Fertigung aufgrund der Zweiteiligkeit des Lichtleiters erhalten, beispielsweise durch ein kleineres benötigtes Spritzgusswerkzeug einhergehend mit kürzeren Spritzguss-Zykluszeiten, einer Verringerung der Materialschwindung, etc.. Zudem kann durch Symmetrie der beiden Zweige eine weitere Kosteneinsparung erreicht werden, da in diesem Fall ein oder mehrere identische Spritzgusswerkzeuge für den linken und rechten Zweig des Lichtleiters verwendet werden können.

Weitere Vorteile ergeben sich unter Anderem durch eine Verwertung des am Ende eines ersten Zweigs des beispielsweise für hohe Leuchtdichte vorgesehenen

Lichtleiters austretenden Restlichts durch Einkopplung bzw. Überkopplung in einen gegengekoppelten, zweiten Zweig des Lichtleiters. Bei den beiden Zweigen kann es sich um so genannten Zwillingslichtleiterzweige handeln. Hierdurch wird das Restlicht verwertet und dient gleichzeitig einer Verbesserung der Homogenität des gegengekoppelten, zweiten Zweigs des Lichtleiters, einhergehend mit einer Blickwinkelunabhängigkeit bezüglich der Lichtleiterleuchtdichte. Dessen umgekehrt ebenso in den ersten Zweig des Lichtleiters eingekoppeltes Licht bewirkt bei diesem das selbe. Vorteile gegenüber dem Stand der Technik sind, dass durch die Lichtüberkopplung ansonsten an einer Endfläche eines Lichtleiters austretendes Licht vollständig verwertet wird, wodurch die Lichteffizienz gesteigert wird.

Durch die Zwei- oder Mehrteilung ergibt sich darüber hinaus der Vorteil einer vereinfachten spritzgusstechnischen Fertigung. Die vereinfachte spritzgusstechnische Fertigung ergibt sich beispielsweise durch Verwendung kleinerer Werkzeuge, Verkürzen der Spritzgusszyklen, Verringerung des Materialschwunds, etc..

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: ein Leuchtmittel mit einem Strakverlauf angepassten Lichtleitern nach dem Stand der Technik.
- Fig. 2: ein Leuchtmittel umfassend einen Lichtleiter mit beidseitiger Lichteinkopplung und zwei getrennten Zweigen mit gegenseitiger Lichtüberkopplung.
- Fig. 3: eine Detailansicht des Lichtleiters aus Fig. 2 an der Lichtüberkoppelstelle.

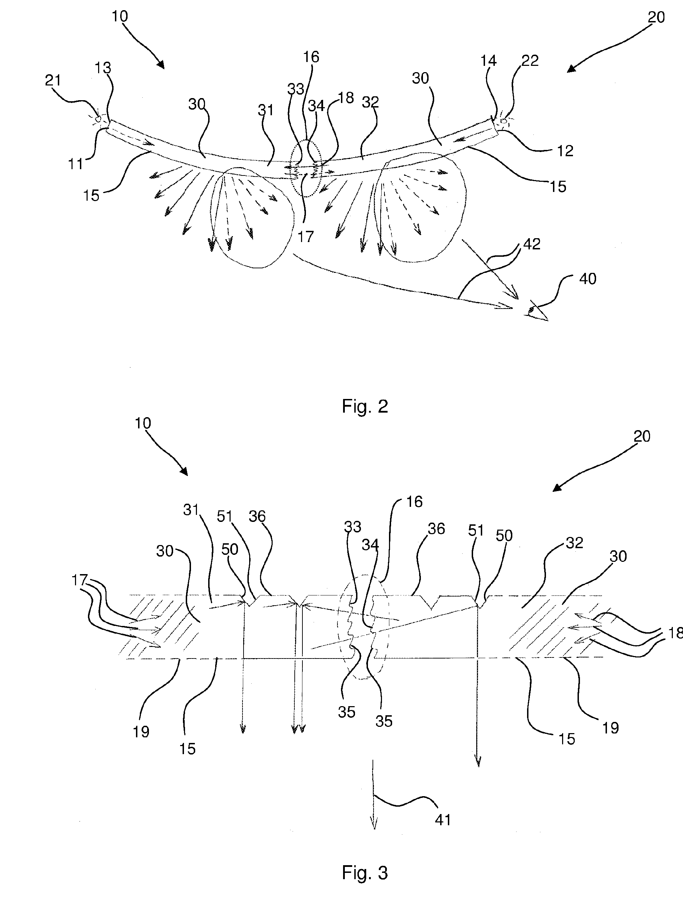

Ein in Fig. 2 und Fig. 3 ganz oder in Teilen dargestellter, beispielsweise stabförmiger, vorzugsweise beispielsweise in einer Ebene und/oder besonders bevorzugt dreidimensional im Raum gekrümmt verlaufender Lichtleiter 10 eines zur bevorzugten Verwendung in einer nicht näher dargestellten Kraftfahrzeugleuchte vorgesehenen Leuchtmittels 20 zur Erfüllung beispielsweise einer Lichtfunktion der Kraftfahrzeugleuchte weist eine beidseitige Lichteinkopplung an zwei dessen gegenüberliegende Endbereiche abschließenden Stirnseiten 11, 12 angeordneten, jeweils mindestens einer Lichtquelle 21, 22 des Leuchtmittels 20 zugeordneten Lichteinkoppelflächen 13, 14 sowie mindestens einer von den Lichteinkoppelflächen 13, 14 verschiedenen Lichtauskoppelfläche 15 auf.

Der Lichtleiter 10 zeichnet sich durch eine zumindest zweistückige Ausgestaltung mit mindestens zwei getrennten Zweigen 30 umfassend zumindest einen ersten Zweig 31 und einen zweiten Zweig 32 mit jeweils einer Lichteinkoppelfläche 13, 14 und einer dieser gegenüberliegenden Lichtüberkoppelfläche 33, 34 aus. Mit seiner jeweiligen Lichtüberkoppelfläche 33, 34 ist jeder Zweig 30, 31, 32 an einer Lichtüberkoppelstelle 16 einem benachbarten Zweig 30, 32, 31 zugewandt und grenzt an diesen an. Vermittels seiner Lichtüberkoppelfläche 33, 34 koppelt jeder Zweig 30, 31, 32 noch nicht aus diesem über bzw. per bzw. via die Lichtauskoppelfläche 15 ausgekoppeltes und in diesem in Richtung der bzw. zur Lichtüberkoppelstelle 16 hin propagiertes Licht 17, 18 in den benachbarten, jeweils angrenzenden Zweig 30, 31, 32 über. Entsprechend umgekehrt empfängt jeder Zweig 30, 31, 32 in diesen vom benachbarten Zweig via dessen Lichtüberkoppelfläche 33, 34 übergekoppeltes Licht 17, 18. Dabei wird in jeden Zweig 30, 31, 32 noch nicht aus dem angrenzenden Zweig 30, 32, 31 ausgekoppeltes und in Richtung der Lichtüberkoppelfläche 33, 34 im Zweig 30, 31, 32 propagiertes Licht 17, 18 eingekoppelt.

Wichtig ist an dieser Stelle hervorzuheben, dass zwischen dem ersten Zweig 31 und dem zweiten Zweig 32 mindestens ein dritter Zweig mit zwei einander gegenüberliegenden Lichtüberkoppelflächen angeordnet sein kann, mit denen der dritte Zweig wiederum jeweils einer Lichtüberkoppelfläche eines benachbarten Zweige 30, beispielsweise der Lichtüberkoppelfläche 33 des ersten Zweigs 31 bzw. der Lichtüberkoppelfläche 34 des zweiten Zweigs 32 zugewandt ist.

Die Zweige 30, 31, 32 können wie in Fig. 2 und Fig. 3 dargestellt konstante Querschnittsabmessungen und/oder Querschnittsform aufweisen. Besonders bevorzugt sind der erste Zweig 31 und der zweite Zweig 32 symmetrisch und/oder identisch ausgeführt.

An der Lichtüberkoppelstelle 16 kann zwischen den zwei einander zugewandten, gegenüberliegenden Lichtüberkoppelflächen 33, 34 ein der Lichtüberkopplung förderliches optisches Element angeordnet sein. Alternativ oder zusätzlich kann an wenigstens einer der der Lichtüberkoppelstelle 16 einander zugewandten, gegenüberliegenden Lichtüberkoppelflächen 33, 34 mindestens eine optische Struktur 35 ausgebildet sein. Bei der optischen Struktur 35 handelt es sich um eine die Lichtüberkopplung fördernde Ausgestaltung zumindest einer der zwei an einer Lichtüberkoppelstelle 16 einander gegenüberliegenden, einander zugewandten Lichtüberkoppelflächen 33, 34 oder eines Teils hiervon. Die optische Struktur 35 kann beispielsweise mindestens eine Fresnellinsenstruktur und/oder wenigstens eine Konvexlinsenstruktur umfassen.

Der Lichtleiter 10 ist bevorzugt stabförmig. Bei einem stabförmigen Lichtleiter 10 bilden die die beiden Endbereiche abschließenden Stirnseiten 11, 12 jeweils eine Lichteinkoppelfläche 13, 14, welche eine sich entlang einer Mittelachse des Lichtleiters 10 erstreckende und die mindestens eine Lichtauskoppelfläche 15 umfassende Lichtleitervorderseite 19 mit einer sich ebenfalls entlang einer Mittelachse des Lichtleiters 10 erstreckenden und bevorzugt zumindest eine Lichtumlenkfläche 50 umfassenden Lichtleiterrückseite 36 verbinden. Die mindestens eine Lichtüberkoppelstelle 16 liegt dabei bevorzugt entlang der Mittelachse gesehen zwischen den beiden Stirnseiten 11, 12.

Die mindestens eine Lichtumlenkfläche 50 umfasst vorzugsweise zumindest zum Teil wenigstens eine beispielsweise totalreflektierende Prismenstruktur 51, vermittels der in den Lichtleiter 10 an den Lichteinkoppelflächen 13, 14 ein- und an den Lichtüberkoppelflächen 33, 34 von den jeweils an einer Lichtüberkoppelstelle 16 benachbarten Zweigen 30, 31, 32 ineinander übergekoppeltes Licht 17, 18 gezielt in einer oder mehreren Richtungen zur Lichtauskoppelfläche 15 hin umgelenkt und an der Lichtauskoppelfläche 15 unter Brechung beim Übergang vom Lichtleitermaterial zum umgebenden Medium, beispielsweise zur umgebenden Luft, in wenigstens einer Vorzugsrichtung 41 bevorzugt unter Einhaltung einer beispielsweise gesetzlich vorgegebenen lichttechnischen Anforderungen an eine Kraftfahrzeugleuchte in einer oder mehreren Vorzugsrichtungen 41 genügenden Leuchtdichte ausgekoppelt wird.

Sich durch die beschriebenen Maßnahmen ergebende Vorteile sind, dass in Fig. 2 durch gestrichelte Pfeile dargestelltes, von der dem linken, ersten Zweig 31 des Lichtleiters 10 zugeordneten Lichtquelle 21 eingestrahlte, und in den rechten, zweiten Zweig 32 übergekoppelte Licht 17 dort nicht entgegen seiner Propagationsrichtung im rechten, zweiten Zweig 32 umgelenkt werden muss, um in Vorzugsrichtung 41 ausgekoppelt zu werden. Ebenso verhält es sich für durch durchgezogene Pfeile dargestelltes, von der dem rechten, zweiten Zweig 32 des Lichtleiters 10 zugeordneten Lichtquelle 22 eingestrahltes, und in den linken, ersten Zweig 31 übergekoppeltes Licht 18. Auch dieses muss nicht entgegen seiner Propagationsrichtung umgelenkt werden, um in Vorzugsrichtung 41 aus der Lichtauskoppelfläche 15 aus dem Lichtleiter 10 ausgekoppelt zu werden. Hierdurch erscheinen für einen Betrachter 40 aus einem durch Pfeile angedeuteten Betrachtungswinkel 42 sowohl der linke, erste Zweig 31, als auch der rechte, zweite Zweig 32 gleich hell und ohne Leuchtdichteunterschied.

Die Leuchtdichteverteilung des Lichtleiters 10 ist damit aus allen Betrachtungspositionen im gesamten Halbraum hinter dem Kraftfahrzeug konstant. Gleichzeitig ist durch die Zwei- oder Mehrteiligkeit des Lichtleiters 10 die spritzgußtechnische Fertigung vereinfacht, beispielsweise durch kleineres Spritzgusswerkzeug, Verkürzung des Spritzgusszyklus und Verringerung der Materialschwindung, um beispielhaft nur einige hieraus hervorgehende Vorteile zu nennen.

Wichtig ist hervorzuheben, dass durch eine beispielsweise fahrzeugaußenseitige Einkopplung von Licht in den zweiteiligen Lichtleiter 10 und die beispielsweise mittels an die Lichtverteilung an der Lichtüberkoppelstelle 16 des Lichtleiters 10 angepasste Optiken 35, die in ihrer Ausführung sowohl in die Lichtüberkoppelflächen 33, 34 integriert als auch als Zusatzoptiken ausgeführt denkbar sind, eine effiziente Überkopplung des Lichts 17, 18 von einem Zweig 30, 31 des Lichtleiters 10 in den anderen Zweig 30, 32 des Lichtleiters 10, sowie durch eine derartige Gestaltung der beispielsweise als Prismen 51 ausgeführten Lichtauskoppelelemente 50, dass sowohl das in Fig. 2 von der linksseitg angeordneten Lichtquelle 21 von links kommende Licht 17, als auch das von der rechtsseitig angeordneten Lichtquelle 22 von rechts kommende Licht 18 vornehmlich in Vorzugsrichtung 41 ausgekoppelt wird, die Problematik der Vorzugsrichtung der Lichtpropagation im Lichtleiter 10, die in rein einseitig gespeisten Lichtleitern 01, 02 zur Leuchtdichteblickwinkelabhängigkeit führt, umgangen wird.

Die Erfindung ist insbesondere im Bereich der Herstellung von Lichtleitern und Leuchtmitteln für Kraftfahrzeugleuchten sowie der Herstellung von Kraftfahrzeugleuchten selbst gewerblich anwendbar.

### Bezugszeichenliste

- 01: Lichtleiter
- 02: Lichtleiter
- 03: Lichteinkoppelfläche
- 04: Lichteinkoppelfläche
- 05: Lichtquelle
- 06: Beobachter
- 07: Leuchtmittel
- 08: Vorzugsrichtung
- 09: Betrachtungswinkel
- 10: Lichtleiter
- 11: Stirnseite
- 12: Stirnseite
- 13: Lichteinkoppelfläche
- 14: Lichteinkoppelfläche
- 15: Lichtauskoppelfläche
- 16: Lichtüberkoppelstelle
- 17: in Richtung Lichtüberkoppelstelle propagiertes Licht
- 18: in Richtung Lichtüberkoppelstelle propagiertes Licht
- 19: Lichtleitervorderseite
- 20: Leuchtmittel
- 21: Lichtquelle
- 22: Lichtquelle
- 30: Zweig
- 31: erster Zweig
- 32: zweiter Zweig
- 33: Lichtüberkoppelfläche
- 34: Lichtüberkoppelfläche
- 35: optische Struktur
- 36: Lichtleiterrückseite
- 40: Betrachter
- 41: Vorzugsrichtung
- 42: Betrachtungswinkel
- 50: Lichtumlenkfläche
- 51: Prismenstruktur

## Patentansprüche

1. Lichtleiter (10) mit beidseitiger Lichteinkopplung an zwei dessen gegenüberliegende Endbereiche abschließenden Stirnseiten (11, 12) angeordneten Lichteinkoppelflächen (13, 14) sowie mindestens einer von den Lichteinkoppelflächen (13, 14) verschiedenen Lichtauskoppelfläche (15), **gekennzeichnet durch**
mindestens zwei getrennte Zweige (30, 31, 32), umfassend zumindest einen ersten Zweig (31) und einen zweiten Zweig (32) mit jeweils einer Lichteinkoppelfläche (13, 14) und einer dieser gegenüberliegenden Lichtüberkoppelfläche (33, 34), mit welcher Lichtüberkoppelfläche (33, 34) jeder Zweig (30, 31, 32) an einer Lichtüberkoppelstelle (16) einem benachbarten Zweig (30, 32, 31) zugewandt ist, und vermittels welcher Lichtüberkoppelfläche (33, 34) jeder Zweig (30, 31, 32) in diesem zur Lichtüberkoppelstelle (16) hin propagiertes Licht (17, 18) in den jeweils benachbarten Zweig (30, 32, 31) überkoppelt.

2. Lichtleiter nach Anspruch 1,
**dadurch gekennzeichnet,**
**dass** zwischen dem ersten Zweig (31) und dem zweiten Zweig (32) mindestens ein dritter Zweig mit zwei einander gegenüberliegenden Lichtüberkoppelflächen (33, 34) angeordnet ist, wobei wenn zwei oder mehrere dritte Zweige vorgesehen sind, diese bevorzugt symmetrisch und/oder identisch ausgeführt sind.

3. Lichtleiter nach Anspruch 1 oder 2,
**dadurch gekennzeichnet,**
**dass** die Zweige (30, 31, 32) konstante Querschnittsabmessungen und/oder Querschnittsform aufweisen.

4. Lichtleiter nach Anspruch 1, 2 oder 3,
**gekennzeichnet durch**
symmetrische und/oder identische erste und zweite Zweige (31, 32).

5. Lichtleiter nach einem der Ansprüche 1 bis 4,
**gekennzeichnet durch**
- mindestens ein an wenigstens einer Lichtüberkoppelstelle (16) zwischen zwei einander zugewandten, gegenüberliegenden Lichtüberkoppelflächen (33, 34) angeordnetes optisches Element und/oder
- mindestens eine an wenigstens einer der an zumindest einer Lichtüberkoppelstelle (16) einander zugewandten, gegenüberliegenden Lichtüberkoppelflächen (33, 34) ausgebildete optische Struktur (35).

6. Lichtleiter nach einem der vorhergehenden Ansprüche,
**gekennzeichnet durch**
eine an wenigstens einer Lichtüberkoppelstelle (16) vorgesehene Kupplung.

7. Lichtleiter nach Anspruch 6,
**dadurch gekennzeichnet,**
**dass** die Kupplung eine Rastverbindung umfasst.

8. Lichtleiter nach einem der vorhergehenden Ansprüche,
**dadurch gekennzeichnet,**
**dass** der Lichtleiter (10) stabförmig ist, wobei die die beiden Endbereiche des Lichtleiters (10) abschließenden Stirnseiten (11, 12) jeweils eine Lichteinkoppelfläche (13, 14) umfassen, welche eine sich entlang einer Mittelachse des Lichtleiters (10) erstreckende und die mindestens eine Lichtauskoppelfläche (15) umfassende Lichtleitervorderseite (19) mit einer sich entlang einer Mittelachse des Lichtleiters (10) erstreckenden Lichtleiterrückseite (36) verbinden.

9. Leuchtmittel (20) mit mindestens zwei Lichtquellen (21, 22) sowie wenigstens einem den Lichtquellen (21, 22) zugeordneten Lichtleiter (10), **gekennzeichnet durch**
einen Lichtleiter (10) nach einem der vorhergehenden Ansprüche, wobei der Lichteinkoppelfläche (13, 14) jeweils des ersten Zweigs (31) und des zweiten Zweigs (32) jeweils zumindest eine Lichtquelle (21, 22) zugeordnet ist.

10. Kraftfahrzeugleuchte mit einem von einem Leuchtengehäuse und einer Lichtscheibe umschlossenen Leuchteninnenraum, mindestens einem in dem Leuchteninnenraum untergebrachten Leuchtmittel (20) zur Erfüllung mindestens einer Lichtfunktion,
**gekennzeichnet durch**
ein Leuchtmittel (20) nach Anspruch 9 mit einem Lichtleiter (10) nach einem der Ansprüche 1 bis 8.

## Geänderte Patentansprüche

### Geänderte Patentansprüche gemäss Regel 137(2) EPÜ.

**1.** Lichtleiter (10) mit:
- beidseitiger Lichteinkopplung an zwei dessen gegenüberliegende Endbereiche abschließenden Stirnseiten (11, 12) angeordneten Lichteinkoppelflächen (13, 14),
- mindestens einer von den Lichteinkoppelflächen (13, 14) verschiedenen Lichtauskoppelfläche (15), sowie
- mindestens zwei getrennten Zweigen (30, 31, 32), umfassend zumindest einen ersten Zweig (31) und einen zweiten Zweig (32) mit jeweils einer Lichteinkoppelfläche (13, 14),
**dadurch gekennzeichnet,**
**dass** der erste Zweig (31) und der zweite Zweig (32) jeweils eine der Lichteinkoppelfläche (13, 14) gegenüberliegende Lichtüberkoppelfläche (33, 34) aufweisen, mit welcher Lichtüberkoppelfläche (33, 34) jeder Zweig (30, 31, 32) an einer Lichtüberkoppelstelle (16) einem benachbarten Zweig (30, 32, 31) zugewandt ist, und vermittels welcher Lichtüberkoppelfläche (33, 34) jeder Zweig (30, 31, 32) in diesem zur Lichtüberkoppelstelle (16) hin propagiertes Licht (17, 18) in den jeweils benachbarten Zweig (30, 32, 31) überkoppelt.

**2.** Lichtleiter nach Anspruch 1,
**dadurch gekennzeichnet,**
**dass** zwischen dem ersten Zweig (31) und dem zweiten Zweig (32) mindestens ein dritter Zweig mit zwei einander gegenüberliegenden Lichtüberkoppelflächen (33, 34) angeordnet ist, wobei wenn zwei oder mehrere dritte Zweige vorgesehen sind, diese bevorzugt symmetrisch und/oder identisch ausgeführt sind.

**3.** Lichtleiter nach Anspruch 1 oder 2,
**dadurch gekennzeichnet,**
**dass** die Zweige (30, 31, 32) konstante Querschnittsabmessungen und/oder Querschnittsform aufweisen.

**4.** Lichtleiter nach Anspruch 1, 2 oder 3,
**gekennzeichnet durch**
symmetrische und/oder identische erste und zweite Zweige (31, 32).

**5.** Lichtleiter nach einem der Ansprüche 1 bis 4,
**gekennzeichnet durch**
- mindestens ein an wenigstens einer Lichtüberkoppelstelle (16) zwischen zwei einander zugewandten, gegenüberliegenden Lichtüberkoppelflächen (33, 34) angeordnetes optisches Element und/oder
- mindestens eine an wenigstens einer der an zumindest einer Lichtüberkoppelstelle (16) einander zugewandten, gegenüberliegenden Lichtüberkoppelflächen (33, 34) ausgebildete optische Struktur (35).

**6.** Lichtleiter nach einem der vorhergehenden Ansprüche,
**gekennzeichnet durch**
eine an wenigstens einer Lichtüberkoppelstelle (16) vorgesehene Kupplung.

**7.** Lichtleiter nach Anspruch 6,
**dadurch gekennzeichnet,**
**dass** die Kupplung eine Rastverbindung umfasst.

**8.** Lichtleiter nach einem der vorhergehenden Ansprüche,
**dadurch gekennzeichnet,**
**dass** der Lichtleiter (10) stabförmig ist, wobei die die beiden Endbereiche des Lichtleiters (10) abschließenden Stirnseiten (11, 12) jeweils eine Lichteinkoppelfläche (13, 14) umfassen, welche eine sich entlang einer Mittelachse des Lichtleiters (10) erstreckende und die mindestens eine Lichtauskoppelfläche (15) umfassende Lichtleitervorderseite (19) mit einer sich entlang einer Mittelachse des Lichtleiters (10) erstreckenden Lichtleiterrückseite (36) verbinden.

**9.** Leuchtmittel (20) mit mindestens zwei Lichtquellen (21, 22) sowie wenigstens einem den Lichtquellen (21, 22) zugeordneten Lichtleiter (10), **gekennzeichnet durch**
einen Lichtleiter (10) nach einem der vorhergehenden Ansprüche, wobei der Lichteinkoppelfläche (13, 14) jeweils des ersten Zweigs (31) und des zweiten Zweigs (32) jeweils zumindest eine Lichtquelle (21, 22) zugeordnet ist.

**10.** Kraftfahrzeugleuchte mit einem von einem Leuchtengehäuse und einer Lichtscheibe umschlossenen Leuchteninnenraum, mindestens einem in dem Leuchteninnenraum untergebrachten Leuchtmittel (20) zur Erfüllung mindestens einer Lichtfunktion,
**gekennzeichnet durch**
ein Leuchtmittel (20) nach Anspruch 9 mit einem Lichtleiter (10) nach einem der Ansprüche 1 bis 8.
